# EUROPÄISCHE PATENTSCHRIFT

(11) **EP 2 167 273 B1**
(45) Veröffentlichungstag und Bekanntmachung des Hinweises auf die Patenterteilung: **11.01.2012**
(21) Anmeldenummer: 08736243.0
(22) Anmeldetag: 15.04.2008
(51) Int. Cl.: B23Q 5/58, F16P 3/14

(54) **WERKZEUGMASCHINENÜBERWACHUNGSVORRICHTUNG**
MACHINE TOOL MONITORING APPARATUS
DISPOSITIF DE CONTRÔLE DE MACHINE-OUTIL

(30) Priorität: 15.06.2007 DE 102007027669; 09.01.2008 DE 102008003585
(43) Veröffentlichungstag der Anmeldung: 31.03.2010
(60) Teilanmeldung: 11176810.7
(73) Patentinhaber: Robert Bosch GmbH, 70442 Stuttgart (DE)
(72) Erfinder: STELLMANN, Georg, 71642 Ludwigsburg (DE); JACKISCH, Sebastian, 71638 Ludwigsburg (DE)
(86) Internationale Anmeldenummer: PCT/EP2008/054555
(87) Internationale Veröffentlichungsnummer: WO 2008/151872

(56) Entgegenhaltungen:
- EP-A- 1 422 022
- DE-A1-102007 039 570
- GB-A- 2 207 999
- US-A- 5 436 613
- US-A1- 2006 101 960
- US-A1- 2006 197 020

## Beschreibung

### Stand der Technik

Die Erfindung geht aus von einer Werkzeugmaschinenüberwachungsvorrichtung nach dem Oberbegriff des Anspruchs 1.

Es ist eine Werkzeugmaschinenüberwachungsvorrichtung mit einer Erkennungseinheit zur Materialerkennung bekannt.

So ist aus der US 2006/0101960A ein optischer Annäherungssensor für ein Elektrowerkzeug, wie beispielsweise eine Kreissäge, bekannt, der ein Messsignal im sichtbaren, nahinfraroten oder infraroten Wellenlängenbereich aussendet und das von einem Gegenstand reflektierte Signal misst. Aufgrund der unterschiedlichen Absorptionseigenschaften von menschlichem Gewebe und einem von dem Elektrowerkzeug zu bearbeitenden Material kann durch Messung der reflektierten Intensität die Anwesenheit von menschlichem Gewebe im Gefahrenbereich des Werkzeuges detektiert werden und beispielsweise eine Sicherheitsabschaltung des Gerätes vorgenommen werden

Die EP 1 422 022 A1 offenbart ein Elektrowerkzeug in Form einer Tischkreissäge mit einem Überwachungssystem, welches einen oder mehrere Radarsensoren umfasst. Über die Messung des Abstandes und der Geschwindigkeit von Objekten können Gefahrensituationen detektiert werden und das Elektrowerkzeug abgebremst oder auch angehalten werden.

Die GB 2 207 999 A zeigt ein Sicherheitssystem für Maschinen welches einen Infrarotsensor aufweist. Das System der GB 2 207 999 A besitzt einen Infrarotsensor in Form einer LED, der ein aufgefächertes Infrarotsignal über eine Überwachungsbereich aussendet. Mittels eines Reflektorelementes wird das Überwachungssignal zurück zum Sensor geleitet. Wird das Überwachungssignal durch ein Objekt, beispielsweise einem Körper oder eine Hand unterbrochen, so kann eine Sicherheitsabschaltung der Maschine erfolgen.

### Vorteile der Erfindung

Die Erfindung geht aus von einer Werkzeugmaschinenüberwachungsvorrichtung mit einer Erkennungseinheit, die zur Anwesenheitserkennung einer Materialart in einem Werkzeugmaschinenarbeitsbereich mittels der spektralen Auswertung einer Strahlung vorgesehen ist.

Es wird vorgeschlagen, dass die Erkennungseinheit eine Sensoreinheit mit wenigstens einem Empfindlichkeitsbereich zur Strahlungserfassung in einem Wellenlängenbereich aufweist, der zumindest teilweise im Infrarotspektrum angeordnet ist. Darüber hinaus weist die erfindungsgemäße Sensoreinheit zumindest einen weiteren Empfindlichkeitsbereich auf, der zur Strahlungserfassung in einem weiteren Wellenlängenbereich vorgesehen ist, wodurch eine gesteigerte Sicherheit in der Erkennung der Materialart erreicht werden kann. Die Wellenlängenbereiche können sich überlappen. Jedoch ist von Vorteil, wenn die Wellenlängenbereiche voneinander getrennt sind. Eine besonders genaue Erkennung kann erreicht werden, wenn die Sensoreinheit zumindest drei Empfindlichkeitsbereiche aufweist, die jeweils zur Strahlungserfassung in einem unterschiedlichen Wellenlängenbereich vorgesehen sind.

Die Erkennungseinheit weist zudem ein Auswertemittel auf, das dazu vorgesehen ist, das Vorhandensein der Materialart anhand eines Verhältnisses von zumindest zwei Strahlungskenngrößen zu erkennen, die jeweils einem Strahlungsanteil in einem unterschiedlichen Wellenlängenbereich zugeordnet sind. Dadurch kann vorteilhaft eine schnelle Erkennung erreicht werden. Insbesondere kann auf die Berücksichtigung einer Referenzstrahlung verzichtet werden. Unter einer "Strahlungskenngrö-βe" soll insbesondere eine Kenngröße verstanden werden, die anhand einer auf die Sensoreinheit einfallenden Strahlung erfasst wird. Diese Kenngröße kann insbesondere eine elektrische Kenngröße sein.

Dadurch kann eine zuverlässige und schnelle Erkennung einer Anwendungssituation bei einer Werkzeugmaschine kostengünstig erreicht werden.

Unter einem "Werkzeugmaschinenarbeitsbereich" soll insbesondere ein Bereich einer Werkzeugmaschine in der direkten Umgebung eines Werkzeugs verstanden werden. Unter einem Bereich in der "direkten" Umgebung des Werkzeugs soll insbesondere ein Bereich verstanden werden, bei dem jeder Punkt des Bereichs einen kleinsten Abstand zum Werkzeug aufweist, der maximal 10 cm, bevorzugt maximal 5 cm und besonders bevorzugt maximal 2 cm beträgt.

Unter einer "Strahlung" soll in diesem Zusammenhang insbesondere eine elektromagnetische Strahlung verstanden werden. Unter einem "Spektrum" einer von der Sensoreinheit erfassten Strahlung soll insbesondere eine Verteilung einer Strahlungskenngröße, insbesondere der Intensität der Strahlung in Abhängigkeit von der Wellenlänge, der Frequenz und/oder der Zeit verstanden werden. Ferner soll unter einer "spektralen Auswertung" einer Strahlung insbesondere eine Signalauswertung verstanden werden, bei der ein Auswerteergebnis durch Erfassung eines Charakteristikums eines Spektrums der Strahlung gewonnen wird. Um eine schnelle Auswertung zu erreichen, entspricht ein Charakteristikum des Spektrums insbesondere einer über einen Wellenlängenbereich integrierten Signalintensität.

Um eine hohe Sicherheit bei der Anwendung einer Werkzeugmaschine zu erreichen, weist die Erkennungseinheit vorzugsweise ein Auswertemittel zur Auswertung einer von der Sensoreinheit erfassten Strahlung auf, das anhand der Strahlung zur Anwesenheitserkennung von menschlichem Gewebe im Werkzeugmaschinenarbeitsbereich vorgesehen ist.

In einer bevorzugten Ausführung der Erfindung wird vorgeschlagen, dass die Erkennungseinheit zur Anwesenheitserkennung mittels der Auswertung eines Reflektionsspektrums einer auf ein Untersuchungsobjekt reflektierten Strahlung vorgesehen ist, wodurch eine effektive, auf einer Kontrasterfassung basierte Erkennung der Materialart erreicht werden kann.

Es kann eine besonders zuverlässige Erkennung erreicht werden, wenn der Wellenlängenbereich ein nahmittlerer Infrarotbereich ist. Es kann dadurch ein Empfindlichkeitsbereich bereitgestellt werden, welcher gezielt auf die Erfassung und die Auswertung eines Reflektionsspektrums abgestimmt ist. Unter einem "nahmittleren Infrarotbereich" soll in diesem Zusammenhang insbesondere ein Wellenlängenintervall des Infrarotspektrums verstanden werden, welches unterhalb der Wellenlänge 15 µm angeordnet ist. Es kann ferner ein hoher Kontrast zwischen menschlichem Gewebe und Werkstoff erreicht werden, wenn der Empfindlichkeitsbereich zur Erfassung einer Strahlung in einem Wellenlängenintervall des Infrarotspektrums unterhalb der Wellenlänge 8 µm vorgesehen ist. Insbesondere ist von Vorteil, wenn der Wellenlängenbereich ein naher Infrarotbereich ist. Unter einem "nahen Infrarotbereich" soll in diesem Zusammenhang insbesondere ein Wellenlängenintervall des Infrarotspektrums verstanden werden, welches unterhalb der Wellenlänge 1,5 µm angeordnet ist, wie insbesondere ein Wellenlängenintervall im IR-A Bereich. Der Wellenlängenbereich kann ferner teilweise im sichtbaren Bereich des elektromagnetischen Spektrums angeordnet sein.

Es kann ein Auswertesignal mit einer hohen Signalintensität erreicht werden, wenn die Erkennungseinheit eine Sendeeinheit aufweist, die dazu vorgesehen ist, eine Strahlung mit zumindest einem Strahlungsanteil im Wellenlängenbereich zu senden.

In einer weiteren Ausbildung der Erfindung wird vorgeschlagen, dass die Sendeeinheit dazu vorgesehen ist, eine Strahlung sukzessiv im Wellenlängenbereich und in zumindest einem weiteren Wellenlängenbereich zu senden. Es kann dadurch eine Strahlung gezielt in gewünschten Wellenlängenbereichen erzeugt werden, wobei bei einer Erfassung der Strahlung durch die Sensoreinheit auf eine aufwendige Filterung verzichtet werden kann. Ferner kann ein hohes Signal/Rausch-Verhältnis erreicht werden. Dies kann besonders einfach erreicht werden, wenn die Sendeeinheit zumindest zwei, insbesondere zumindest drei Sensormittel zur Sendung der Strahlung in jeweils einem unterschiedlichen Wellenlängenbereich aufweist, die im Betrieb der Sendeeinheit sukzessiv betrieben werden. Ferner soll bei einem "sukzessiven" Senden in zwei Wellenlängenbereichen insbesondere verstanden werden, dass das Senden im ersten Wellenlängenbereich und das Senden im zweiten Wellenlängenbereich weitestgehend überlappungsfrei sind. Hierbei soll eine Überlappungsdauer, bei der eine Strahlung simultan in beiden Wellenlängenbereichen gesendet wird, weniger als 10 %, vorteilhaft weniger als 5 % und bevorzugt weniger als 1 % der kleinsten Sendedauer in einem Wellenlängenbereich betragen. Besonders vorteilhaft sind die Sendvorgänge überlappungsfrei, wobei durch die Sendeeinheit voneinander getrennte Pulse emittiert werden.

Außerdem wird vorgeschlagen, dass die Werkzeugmaschinenüberwachungsvorrichtung eine Optikeinheit aufweist, die dazu vorgesehen ist, einen Reaktionsbereich der Erkennungseinheit festzulegen. Unter einem "Reaktionsbereich" der Erkennungseinheit soll insbesondere ein Raumbereich verstanden werden, der einem von der Erkennungseinheit vornehmbaren Vorgang zugeordnet ist, welcher bei einem Vorhandensein eines Körpers der Materialart in diesem Raumbereich ausgelöst wird. Der Reaktionsbereich entspricht vorzugsweise zumindest einem Teilbereich des Werkzeugmaschinenarbeitsbereichs. Alternativ oder zusätzlich kann ein Reaktionsbereich vorgesehen sein, der sich vom Werkzeugmaschinenarbeitsbereich unterscheidet. Beispielsweise kann dieser Reaktionsbereich zu einer Warnungsfunktion der Werkzeugmaschinenüberwachungsvorrichtung vorgesehen sein. Vorteilhafterweise steht die Erkennungseinheit mit einer Aktorikeinheit in Wirkverbindung, wobei das Vorhandensein des Körpers der Materialart im Reaktionsbereich einen Betrieb der Aktorikeinheit, wie z.B. zum Stoppen einer Werkzeugmaschinenantriebseinheit, auslöst. Die Optikeinheit kann einem im Strahlengang der Sensoreinheit geschalteten optischen System entsprechen. Weist die Werkzeugmaschinenüberwachungsvorrichtung eine Sendeeinheit zum Senden einer Strahlung auf, kann die Optikeinheit alternativ oder zusätzlich einem im Strahlengang der Sendeeinheit geschalteten optischen System entsprechen. Durch die Optikeinheit kann eine sichere und komfortable Anwendung einer Werkzeugmaschine erreicht werden, indem eine Reaktion der Erkennungseinheit auf einen abgegrenzten Bereich beschränkt werden kann.

In einer bevorzugten Ausführung der Erfindung wird vorgeschlagen, dass der Wellenlängenbereich schmalbandig ausgebildet ist. Unter einem "schmalbandigen Wellenlängenbereich" soll in diesem Zusammenhang insbesondere ein Wellenlängenbereich verstanden werden, der eine Bandbreite von maximal 100 nm, vorteilhaft maximal 50 nm, bevorzugt maximal 20 nm und besonders bevorzugt maximal 10 nm aufweist. Es kann dadurch auf eine konstruktionsaufwendige Filterung einer erfassten Strahlung vorteilhaft verzichtet werden.

Der Bedienkomfort kann ferner vorteilhaft erhöht werden, wenn die Werkzeugmaschinenüberwachungsvorrichtung eine Markierungseinheit aufweist, die dazu vorgesehen ist, den Reaktionsbereich zu markieren.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Seitenansicht einer Tischkreissäge mit einer Erkennungseinheit,
- Fig. 2: die Tischkreissäge in einer Draufsicht von oben mit einem Reaktionsbereich der Erkennungseinheit,
- Fig. 3: eine schematische Darstellung der Erkennungseinheit mit einer Sendeeinheit zum Senden einer Strahlung in den Reaktionsbereich, einer Sensoreinheit und eines Untersuchungsobjekts,

- Fig. 4: ein Sendemittel der Sendeeinheit und Sensormittel der Sensoreinheit in einer Frontansicht,
- Fig. 5: den Verlauf des Transmissionsfaktors der Sensoreinheit in Abhängigkeit der Wellenlänge,
- Fig. 6: das Reflektionsspektrum einer auf das Reflektionsobjekt reflektierten Strahlung in Abhängigkeit der Wellenlänge,
- Fig. 7: eine interne Schaltung der Erkennungseinheit,
- Fig. 8: eine in der Erkennungseinheit gespeicherte Datenbank,
- Fig. 9: eine alternative Sendeinheit der Erkennungseinheit zur Erzeugung von Pulsen und
- Fig. 10: die Intensität einer von der Sendeeinheit aus Figur 9 erzeugten Strahlung.

### Beschreibung der Ausführungsbeispiele

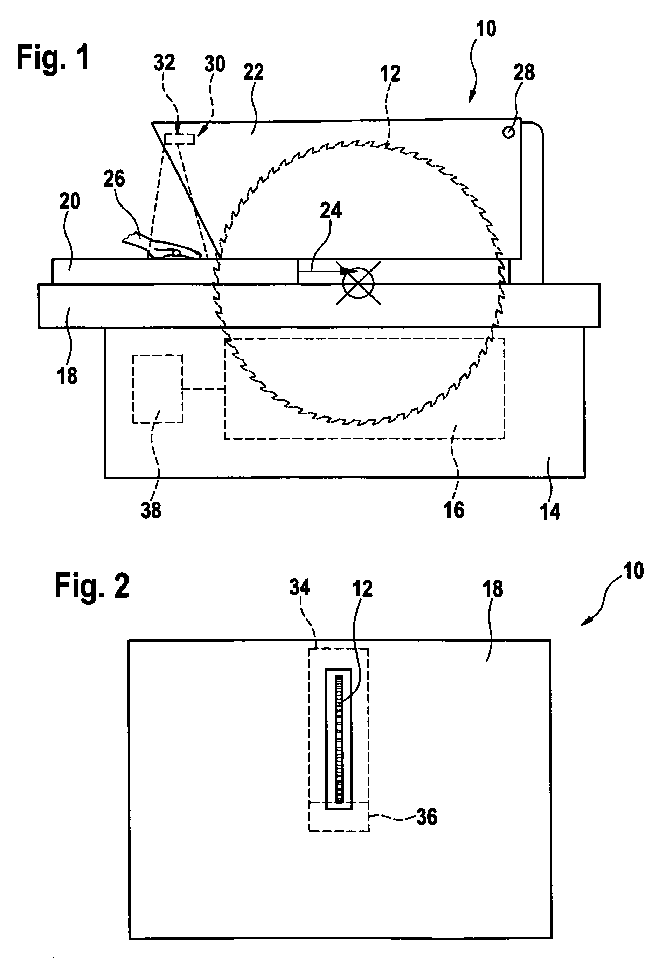

Figur 1 zeigt eine als Tischkreissäge ausgebildete Werkzeugmaschine 10 in einer Seitenansicht. Die Werkzeugmaschine 10 weist ein als scheibenförmiges Sägeblatt ausgebildetes Werkzeug 12 auf, das in einem Sägebetrieb mittels einer in einem Antriebsgehäuse 14 angeordneten und als Elektromotor ausgebildeten Antriebseinheit 16 rotatorisch angetrieben wird. Auf dem Antriebsgehäuse 14 abgestützt ist ein Sägetisch 18 angeordnet, auf welchem ein zu bearbeitendes Werkstück 20 aufgelegt werden kann. Zum Schutz eines Bedieners umfasst die Werkzeugmaschine 10 eine Schutzhaube 22, die in einem unbetriebenen Zustand der Werkzeugmaschine 10 den aus dem Sägetisch 18 herausragenden Teil des Werkzeugs 12 vollständig umschließt. Zur Durchführung einer Bearbeitung des Werkstücks 20 wird dieses auf bekannte Weise in einer Arbeitsrichtung 24 in Richtung auf das Werkzeug 12 durch einen Bediener hinbewegt, von dem eine Hand 26 in der Figur schematisch dargestellt ist. Hierbei wird die Schutzhaube 22, die um eine Drehachse 28 drehbar gelagert ist, durch das Werkstück 20 nach oben geschwenkt, wodurch die Werkzeugschneidkante freigegeben wird.

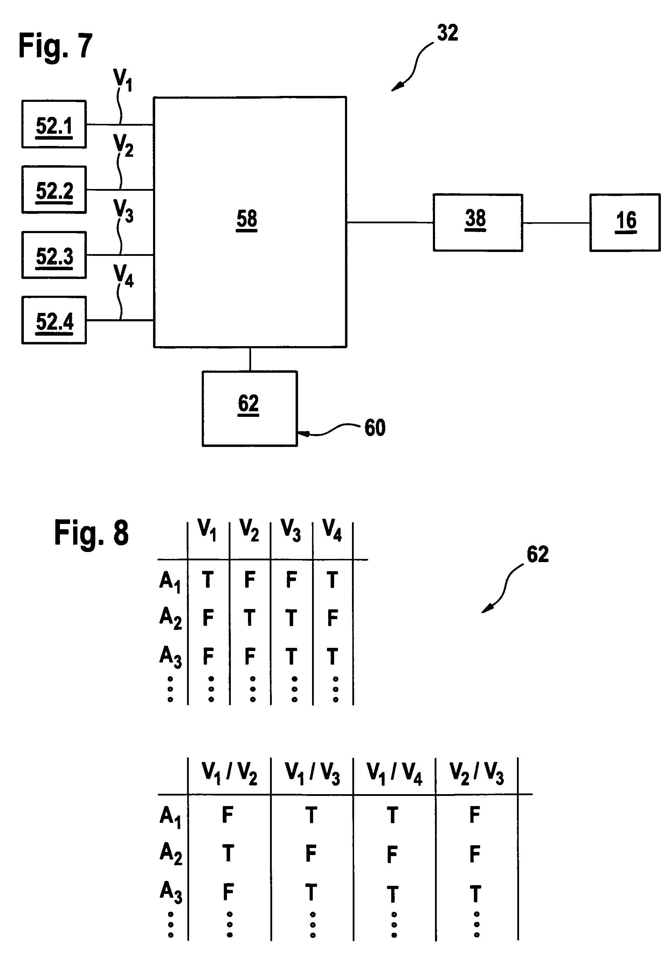

Zur Erhöhung der Bedienersicherheit ist die Werkzeugmaschine 10 mit einer Werkzeugmaschinenüberwachungsvorrichtung 30 versehen. Die Werkzeugmaschinenüberwachungsvorrichtung 30 weist eine Erkennungseinheit 32 auf, die zur Anwesenheitserkennung von menschlichem Gewebe in einem Werkzeugmaschinenarbeitsbereich 34 der Werkzeugmaschine 10 vorgesehen ist. Der Werkzeugmaschinenarbeitsbereich 34 ist in Figur 2 in einer Draufsicht der Werkzeugmaschine 10 von oben zu sehen. Der Übersichtlichkeit halber wurde in Figur 2 auf die Darstellung der Schutzhaube 22 verzichtet. Die Erkennungseinheit 32 weist einen Reaktionsbereich 36 auf, welcher der Betätigung einer mit der Antriebseinheit 16 gekoppelten Aktorikeinheit 38 zugeordnet ist, die mit der Erkennungseinheit 32 in Wirkverbindung steht (siehe Figur 7). Wird durch die Erkennungseinheit 32 das Vorhandensein von menschlichem Gewebe im Reaktionsbereich 36 erkannt, so wird ein Betätigungssignal zu der Aktorikeinheit 38 übertragen, die anhand dieses Betätigungssignals ein Stoppen der Antriebseinheit 16 betätigt. Der Reaktionsbereich 36 entspricht einem Teilbereich des Werkzeugmaschinenarbeitsbereichs 34, der in Arbeitsrichtung 24 vor dem Werkzeug 12 angeordnet ist. Im dargestellten Beispiel ist die Erkennungseinheit 32 in der Schutzhaube 22, und zwar im in Arbeitsrichtung 24 vor dem Werkzeug 12 angeordneten vorderen Bereich der Schutzhaube 22 angeordnet. In einer alternativen Ausführung ist denkbar, dass die Erkennungseinheit 32 an einem Spaltkeil, an einem Parallelanschlag und/oder an einem Ausleger über dem Sägetisch 18 angeordnet ist.

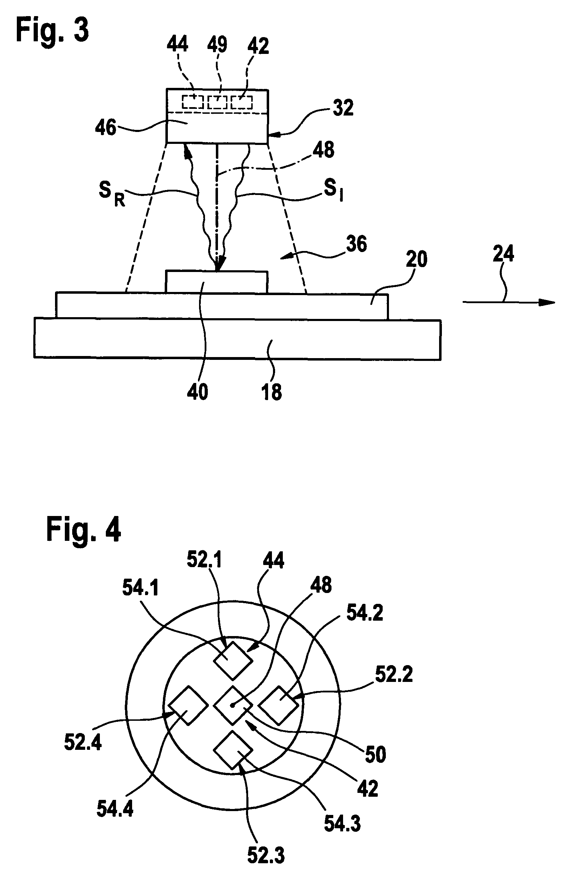

Das Funktionsprinzip der Erkennungseinheit 32 wird anhand der Figur 3 beschrieben. Es sind der Sägetisch 18, das Werkstück 20 und die Erkennungseinheit 32 in einer schematischen Ansicht dargestellt. Der Übersichtlichkeit halber wird auf die Darstellung des Werkzeugs 12 und der Schutzhaube 22 verzichtet. Auf dem Werkstück 20 im Reaktionsbereich 36 ist ein Untersuchungsobjekt 40 angeordnet. Dieses Untersuchungsobjekt 40 kann insbesondere die Hand 26 sein. Die Erkennungseinheit 32 weist eine in der Figur schematisch dargestellte Sendeeinheit 42 auf, die im Betrieb eine Strahlung S_{I} in den Reaktionsbereich 36 sendet. Diese Strahlung S_{I} wird auf das Untersuchungsobjekt 40 reflektiert und als Strahlung S_{R} von einer in der Figur schematisch dargestellten Sensoreinheit 44 der Erkennungseinheit 32 empfangen. Der Sendeeinheit 42 und der Sensoreinheit 44 ist eine Optikeinheit 46 vorgeschaltet. Die Optikeinheit 46 weist eine Linseneinheit auf (nicht dargestellt), die die Grenzen des Reaktionsbereichs 36 festlegt, in welchen die Strahlungen S_{I} gesendet werden. Die Linseneinheit ist ferner dazu ausgelegt, die Empfindlichkeit der Sensoreinheit 44 auf im Reaktionsbereich 36 reflektierte Strahlungen S_{R} zu begrenzen. Die Optikeinheit 46 weist eine optische Achse 48 auf. Die Werkzeugmaschinenüberwachungsvorrichtung 30 weist ferner eine Markierungseinheit 49 auf, die in Figur 3 schematisch dargestellt ist und im Betrieb der Erkennungseinheit 32 den Reaktionsbereich 36 der Erkennungseinheit 32 durch eine Projektion auf den Sägetisch 18 markiert. Beispielsweise kann die Markierungseinheit 49 als Lasermarkierer ausgebildet sein. Alternativ oder zusätzlich kann die Markierung des Reaktionsbereichs 36 von der Sendeeinheit 42 durchgeführt werden, die einen Strahlungsanteil im sichtbaren Bereich erzeugt.

Figur 4 zeigt die Sendeeinheit 42 und die Sensoreinheit 44 der Erkennungseinheit 32 in einer Frontansicht, in welcher die optische Achse 48 die Zeichnungsebene durchschneidet. Die Sendeeinheit 42 weist ein Sendemittel 50 auf, das als LED ausgebildet ist. In der direkten Umgebung des Sendemittels 50 sind vier Sensormittel 52 der Sensoreinheit 44 angeordnet, die jeweils als Photodiode ausgebildet sind.

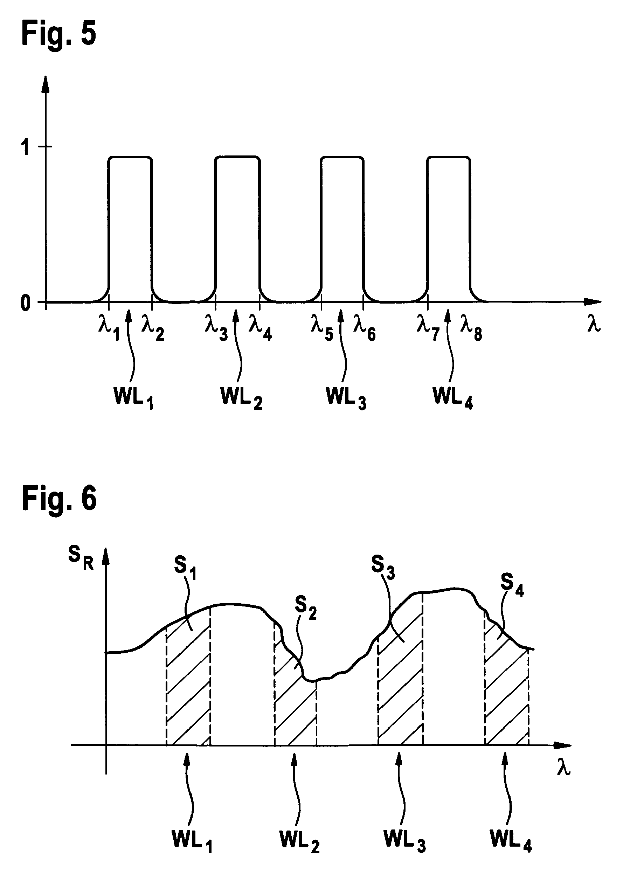

Die Sensormittel 52 weisen jeweils einen Empfindlichkeitsbereich 54 auf, der zur Strahlungserfassung jeweils in einem unterschiedlichen Wellenlängenbereich WL₁ = [λ₁,λ₂], WL₂ = [λ₃,λ₄], WL₃ = [λ₅,λ₆] bzw. WL₄ = [λ₇,λ_{8]} vorgesehen ist. Dies ist in Figur 5 schematisch dargestellt. Figur 5 zeigt den Verlauf des Durchlassfaktors der Sensoreinheit 44 in Abhängigkeit der Wellenlänge λ der durch die Sensoreinheit 44 empfangenen Reflexionsstrahlung S_{R}. Die Wellenlängenbereiche WLᵢ weisen beispielhaft eine zentrale Wellenlänge von 630 nm, 700 nm, 980 nm, 1050 nm und 1200 nm auf und sind schmalbandig ausgebildet mit jeweils einer Bandbreite von ca. 10 nm. Die Sensoreinheit 44 kann zu einer schmalbandigen Filterung der erfassten Strahlung S_{R} zusätzlich zu den Sensormitteln 52 mit einem System von Filterbauteilen versehen sein, das den Sensormitteln 52 vorgeschaltet ist. Bei der Ausführung der Sensormittel 52 als selektive Photodioden ist eine schmalbandige Filterung systeminhärent, wodurch weitere Filterbauteile vorteilhaft vermieden werden können. Alternativ oder zusätzlich zu Photodioden können die Sensormittel 52 als CCD- oder CMOS-Felder, InGaAs-Detektoren, pyroelektrische Detektoren usw. ausgebildet sein.

Die Wellenlängenbereiche WL₂, WL₃, WL₄ sind im Infrarotspektrum angeordnet. Insbesondere sind diese Wellenlängenbereiche WL₂, WL₃, WL₄ jeweils ein Bereich des nahen Infrarotspektrums IR-A mit den Grenzwerten [700 nm, 1400 nm]. Der Wellenlängebereich WL₁ ist zumindest teilweise im sichtbaren Bereich des elektromagnetischen Spektrums angeordnet. Alternativ oder zusätzlich können Wellenlängenbereiche in den Infrarotbereichen IR-B (1,4 - 3 µm) und IR-C (3 - 15 µm) gewählt werden. Die Sendeeinheit 42 mit dem Sendemittel 50 erzeugt eine Strahlung, die die in Figur 5 gezeigten Wellenlängenbereiche WLᵢ umfasst.

Das Prinzip der Anwesenheitserkennung von menschlichem Gewebe im Reaktionsbereich 36 der Erkennungseinheit 32 wird anhand der Figuren 6, 7 und 8 erläutert. Figur 6 zeigt das Reflexionsspektrum der auf das Untersuchungsobjekt 40 reflektierten und von den Sensormitteln 52 erfassten Strahlung S_{R}. Dieses Reflexionsspektrum entspricht der Verteilung der Signalintensität in Abhängigkeit der Wellenlänge λ der Strahlung S_{R}. Die Sensormittel 52 bzw. die Empfindlichkeitsbereiche 54 erfassen jeweils einen Teil des Reflexionsspektrums in den entsprechenden Wellenlängenbereichen WLᵢ. Die Sensormittel 52 erzeugen an deren Ausgangsklemme jeweils eine Strahlungskenngröße Vᵢ, die jeweils als elektrische Spannung ausgebildet ist. Die Strahlungskenngröße V₁ beispielsweise ist proportional zu der über den Wellenlängenbereich WL₁ integrierten und in der Figur 6 schraffierten Signalintensität s₁ der Strahlung S_{R}.

Wie der Figur 7 entnommen werden kann, werden die Strahlungskenngrößen Vᵢ auf einen Eingang eines Auswertemittels 58 der Erkennungseinheit 32 gegeben. In einer weiteren Variante ist denkbar, dass die Strahlungskenngrößen Vᵢ verstärkt werden. Bei einer Auswertung werden die Strahlungskenngrößen Vᵢ mit Werten einer in einer Speichereinheit 60 der Erkennungseinheit 32 gespeicherten Datenbank 62 mittels logischer Operationen verglichen. Diese Datenbank ist in Figur 8 schematisch dargestellt. In einer ersten Auswertungsstrategie werden die erfassten Strahlungskenngrößen Vᵢ mit gespeicherten Werten A₁, A₂, A₃ usw. verglichen. Jedem Paar (Vᵢ, Aᵢ) ist eine Erkennungsvariable zugeordnet, die die Werte "False" (F) oder "True" (T) annehmen kann. Beim Wert "F" wird ein Vorhandensein von menschlichem Gewebe im Reaktionsbereich 36 ausgeschlossen. In einer zweiten, alternativen oder zusätzlichen Auswertungsstrategie werden durch das Auswertemittel 58 Verhältnisse V₁ / V₂; V₁ / V₃ usw. zwischen den verschiedenen Strahlungskenngrößen Vᵢ ermittelt. Diese Verhältnisse werden mit gespeicherten Werten A₁, A₂, A₃ usw. verglichen, wodurch, wie oben beschrieben, auf das Vorhandensein von menschlichem Gewebe im Reaktionsbereich 36 geschlossen werden kann. Durch die Bildung von Verhältnissen kann eine intensitätsunabhängige Erkennung durchgeführt werden. In der Speichereinheit 60 können außerdem Informationen über die spektrale Empfindlichkeit der Sensormittel 52 gespeichert sein, die zur Auswertung der Strahlungskenngrößen Vᵢ herangezogen werden können.

Die hier beschriebene Erkennungseinheit 32 ist eine analoge Erkennungseinheit, in welcher eine Erfassung bzw. Auswertung der reflektierten Strahlung S_{R} ausschließlich auf analoge Weise erfolgt. Hierbei kann eine besonders effektive Erkennung aufgrund von kleinen Erfassungs- bzw. Auswertungszeiten erreicht werden. Ein kombinierter Einsatz von analogen und digitalen Signalverarbeitungsmitteln oder der ausschließliche Einsatz von digitalen Signalverarbeitungsmitteln ist ebenfalls denkbar.

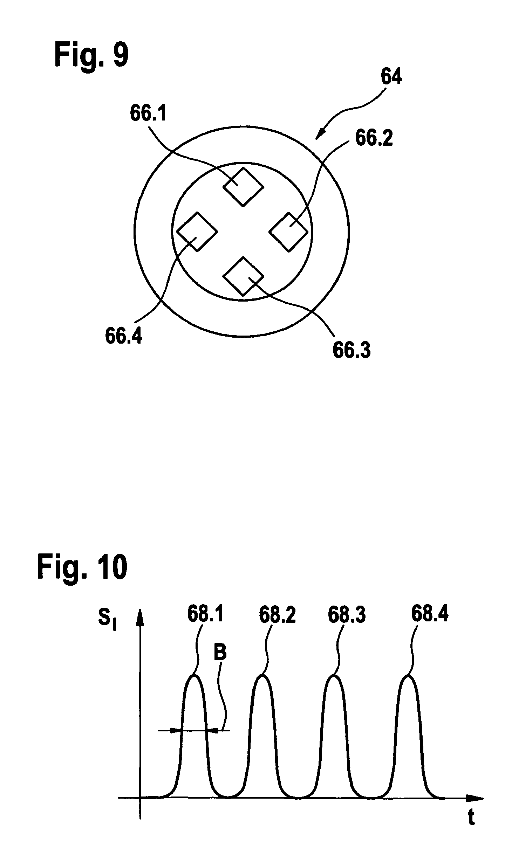

Das Sendemittel 50 sendet eine Strahlung mit einer über die Zeit konstanten Strahlungsintensität. In einer alternativen Ausführungsvariante weist die Erkennungseinheit 32 eine alternative Sendeeinheit 64 auf, die eine Strahlung mit einer variablen Intensität in den Reaktionsbereich 36 sendet. Dies ist in den Figuren 9 und 10 dargestellt. Figur 9 zeigt die Sensoreinheit 64, welche eine Strahlung S_{I} erzeugt, die eine Reihe von Pulsen 68 aufweist und in Figur 10 dargestellt ist. Figur 10 zeigt den Verlauf der Intensität der Strahlung S_{I} in Abhängigkeit von der Zeit t. Ein Puls 68 weist eine Breite B von ca. 100 µs auf. Die Sendeinheit 64 ist dazu vorgesehen, eine Strahlung sukzessiv in den Wellenlängenbereichen WL₁ bis WL₄ zu senden. Hierbei sind in einer Folge von vier aufeinander folgenden Pulsen 68.1 bis 68.4 die Pulse jeweils einem unterschiedlichen Wellenlängenbereich WL₁ bis WL₄ zugeordnet. Die Pulse 68 entsprechen einer Strahlung, die in einem jeweils unterschiedlichen Wellenlängenbereich WLᵢ gesendet wird. Hierzu weist die Sendeeinheit 64 eine Mehrzahl von Sendemitteln 66.1 bis 66.4 auf, die jeweils zur Sendung in einem unterschiedlichen Wellenlängenbereich WL₁ bis WL₄ vorgesehen sind. Hierbei entspricht ein Sendemittel 66.1 für den Puls 68.1 dem Wellenlängenbereich WL₁ usw. Die Sendemittel 66 können z.B. jeweils als LED ausgebildet sein. Durch ein solches sukzessives Strahlen in verschiedenen Wellenlängenbereichen WLᵢ kann auf eine aufwendige Filterung der erfassten reflektierten Strahlung S_{R} verzichtet werden.

## Patentansprüche

1. Werkzeugmaschinenüberwachungsvorrichtung mit einer Erkennungseinheit (32), die zur Anwesenheitserkennung einer Materialart in einem Werkzeugmaschinen-arbeitsbereich (34) mittels der spektralen Auswertung einer Strahlung (S_{R}) vorgesehen ist, wobei die Erkennungseinheit (32) eine Sensoreinheit (44) mit wenigstens einem Empfindlichkeitsbereich (54.2) zur Strahlungserfassung in einem Wellenlängenbereich (WL₂) aufweist, der zumindest teilweise im Infrarotspektrum angeordnet ist, **dadurch gekennzeichnet, dass** die Sensoreinheit (44) zumindest einen weiteren Empfindlichkeitsbereich (54.1, 54.3, 54.4) aufweist, der zur Strahlungserfassung in einem weiteren Wellenlängenbereich (WL₁, WL₃, WL₄) vorgesehen ist, und die Erkennungseinheit (32) ein Auswertemittel (58) aufweist, das dazu vorgesehen ist, das Vorhandensein der Materialart anhand eines Verhältnisses von zumindest zwei Strahlungskenngrößen (V₁, V₂, V₃, V₄) zu erkennen, die jeweils einem Strahlungsanteil in einem unterschiedlichen Wellenlängenbereich (WL₁, WL₂, WL₃, WL₄) zugeordnet sind.

2. Werkzeugmaschinenüberwachungsvorrichtung nach Anspruch 1, **dadurch gekennzeichnet, dass** die Erkennungseinheit (32) zur Anwesenheitserkennung mittels der Auswertung eines Reflektionsspektrums einer auf ein Untersuchungsobjekt (40) reflektierten Strahlung (S_{R}) vorgesehen ist.

3. Werkzeugmaschinenüberwachungsvorrichtung nach Anspruch 1 oder 2, **dadurch gekennzeichnet, dass** der Wellenlängenbereich (WL₂) ein nahmittlerer Infrarotbereich ist.

4. Werkzeugmaschinenüberwachungsvorrichtung nach einem der vorhergehenden Ansprüche, **dadurch gekennzeichnet, dass** die Erkennungseinheit (32) eine Sendeeinheit (42; 64) aufweist, die dazu vorgesehen ist, eine Strahlung mit zumindest einem Strahlungsanteil im Wellenlängenbereich (WL₂) zu senden.

5. Werkzeugmaschinenüberwachungsvorrichtung nach Anspruch 4, **dadurch gekennzeichnet, dass** die Sendeeinheit (64) dazu vorgesehen ist, eine Strahlung sukzessiv im Wellenlängenbereich (WL₂) und in zumindest einem weiteren Wellenlängenbereich (WL₁, WL₃, WL₄) zu senden.

6. Werkzeugmaschinenüberwachungsvorrichtung nach einem der vorhergehenden Ansprüche, **gekennzeichnet durch** eine Optikeinheit (46), die dazu vorgesehen ist, einen Reaktionsbereich (36) der Erkennungseinheit (32) festzulegen

7. Werkzeugmaschinenüberwachungsvorrichtung nach einem der vorhergehenden Ansprüche, **dadurch gekennzeichnet, dass** der Wellenlängenbereich (WL₂) schmalbandig ausgebildet ist.

8. Werkzeugmaschine, insbesondere Schneidwerkzeugmaschine, mit einer Werkzeugmaschinenüberwachungsvorrichtung nach einem der vorhergehenden Ansprüche.

## Claims

1. Machine tool monitoring apparatus comprising a detection unit (32) which is provided for detecting the presence of a material type in a machine tool working region (34) by means of the spectral analysis of a radiation (S_{R}), wherein the detection unit (32) has a sensor unit (44) having at least one sensitivity region (54.2) for detecting radiation within a wavelength range (WL₂) which is arranged at least partly in the infrared spectrum, **characterized in that** the sensor unit (44) has at least one further sensitivity region (54.1, 54.3, 54.4) which is provided for detecting radiation within a further wavelength range (WL₁, WL₃, WL₄), and the detection unit (32) has an evaluating means (58) which is provided for detecting the presence of the material type on the basis of a ratio of at least two radiation variables (V₁, V₂, V₃, V₄) which are each assigned to a radiation portion within a different wavelength range (WL₁, WL₂, WL₃, WL₄).

2. Machine tool monitoring apparatus according to Claim 1, **characterized in that** the detection unit (32) is provided for detecting the presence of a material type by means of the analysis of a reflection spectrum of a radiation (S_{R}) reflected on an object (40) to be examined.

3. Machine tool monitoring apparatus according to Claim 1 or 2, **characterized in that** the wavelength range (WL₂) is a near-medium infrared range.

4. Machine tool monitoring apparatus according to one of the preceding claims, **characterized in that** the detection unit (32) has a transmitting unit (42; 64) which is provided for transmitting a radiation having at least one radiation portion within the wavelength range (WL₂).

5. Machine tool monitoring apparatus according to Claim 4, **characterized in that** the transmitting unit (64) is provided for transmitting a radiation successively within the wavelength range (WL₂) and within at least one further wavelength range (WL₁, WL₃, WL₄).

6. Machine tool monitoring apparatus according to one of the preceding claims, **characterized by** an optics unit (46) which is provided for establishing a reaction region (36) of the detection unit (32).

7. Machine tool monitoring apparatus according to one of the preceding claims, **characterized in that** the wavelength range (WL₂) is a narrow-band range.

8. Machine tool, in particular a cutting machine tool, comprising a machine tool monitoring apparatus according to one of the preceding claims.

## Revendications

1. Dispositif de contrôle de machine-outil, comprenant une unité de détection (32), qui est prévue pour détecter la présence d'un type de matériau dans une plage de travail (34) de la machine-outil, au moyen d'une analyse spectrale d'un rayonnement (S_{R}), l'unité de détection (32) présentant une unité de capteur (44) avec au moins une plage de sensibilité (54.2) pour la détection du rayonnement dans une plage de longueur d'onde (WL₂), qui est située au moins en partie dans le spectre infrarouge, **caractérisé en ce que** l'unité de capteur (44) présente au moins une autre plage de sensibilité (54.1, 54.3, 54.4) qui est prévue pour la détection du rayonnement dans une autre plage de longueur d'onde (WL₁, WL₃, WL₄), et l'unité de détection (32) présente un moyen d'analyse (58) qui est prévu pour détecter la présence du type de matériau à l'aide d'un rapport d'au moins deux grandeurs caractéristiques de rayonnement (V₁, V₂, V₃, V₄), qui sont associées à chaque fois à une proportion de rayonnement dans une plage de longueur d'onde différente (WL₁, WL₂, WL₃, WL₄).

2. Dispositif de contrôle de machine-outil selon la revendication 1, **caractérisé en ce que** l'unité de détection (32) est prévue pour détecter la présence, au moyen de l'analyse d'un spectre de réflexion, d'un rayonnement (S_{R}) réfléchi sur un sujet d'étude (40).

3. Dispositif de contrôle de machine-outil selon la revendication 1 ou 2, **caractérisé en ce que** la plage de longueur d'onde (WL₂) est une plage proche du moyen infrarouge.

4. Dispositif de contrôle de machine-outil selon l'une quelconque des revendications précédentes, **caractérisé en ce que** l'unité de détection (32) présente une unité émettrice (42 ; 64), qui est prévue pour envoyer un rayonnement avec au moins une proportion de rayonnement dans la plage de longueur d'onde (WL₂) .

5. Dispositif de contrôle de machine-outil selon la revendication 4, **caractérisé en ce que** l'unité émettrice (64) est prévue pour envoyer un rayonnement successivement dans la plage de longueur d'onde (WL₂) et dans au moins une autre plage de longueur d'onde (WL₁, WL₃, WL₄).

6. Dispositif de contrôle de machine-outil selon l'une quelconque des revendications précédentes, **caractérisé par** une unité optique (46) qui est prévue pour fixer une plage de réaction (36) de l'unité de détection (32).

7. Dispositif de contrôle de machine-outil selon l'une quelconque des revendications précédentes, **caractérisé en ce que** la plage de longueur d'onde (WL₂) est réalisée avec une bande étroite.

8. Machine-outil, en particulier machine-outil de coupe, comprenant un dispositif de contrôle de machine-outil selon l'une quelconque des revendications précédentes.
